(19) Europäisches Patentamt
European Patent Office
Office européen des brevets

(11) Veröffentlichungsnummer: **0 481 319 B1**

(12) **EUROPÄISCHE PATENTSCHRIFT**

(45) Veröffentlichungstag der Patentschrift: **17.05.95**

(51) Int. Cl.$^6$: **C08G 18/67**

(21) Anmeldenummer: **91117033.0**

(22) Anmeldetag: **07.10.91**

# (54) Zweikomponenten-Polyurethanklebstoffe.

(30) Priorität: **19.10.90 DE 4033221**

(43) Veröffentlichungstag der Anmeldung:
**22.04.92 Patentblatt 92/17**

(45) Bekanntmachung des Hinweises auf die Patenterteilung:
**17.05.95 Patentblatt 95/20**

(84) Benannte Vertragsstaaten:
**BE CH DE ES FR GB IT LI NL**

(56) Entgegenhaltungen:
**EP-A- 0 255 930**
**FR-A- 2 273 608**
**GB-A- 776 979**
**GB-A- 1 317 949**
**US-A- 4 628 092**
**US-A- 4 673 696**

(73) Patentinhaber: **BAYER AG**

**D-51368 Leverkusen (DE)**

(72) Erfinder: **Trinks, Rainer, Dr.**
**Im Daubenthal 3**
**W-4047 Dormagen (DE)**
Erfinder: **Königshofen, Heinrich, Dr.**
**Am Mühlenberg 25**
**W-5060 Bergisch Gladbach 2 (DE)**
Erfinder: **Ganster, Otto, Dr.**
**Droste-Hülshoff-Strasse 5**
**W-5068 Odenthal (DE)**
Erfinder: **Stepanski, Horst, Dr.**
**Rolandstrasse 22**
**W-5090 Leverkusen 3 (DE)**
Erfinder: **Colinas-Martinez, Jose, Dr.**
**Am Stumpf 19**
**W-5632 Wermelskirchen 2 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft verträgliche, lagerstabile Mischungen enthaltend höhermolekulare Polyhydroxylverbindungen und kurzkettige Polyole und deren Verwendung zur Herstellung von Polyurethanen. Die Erfindung betrifft auch die Verwendung dieser lagerstabilen Mischungen in Zweikomponenten-Polyurethanklebstoffen.

Es ist aus der DE-B-1 770 703 bekannt, zur Herstellung von Polyurethanen Gemische von miteinander unverträglichen Polyolen einzusetzen. Auf diese Weise sind Endprodukte mit verbessertem Eigenschaftsniveau wie beispielsweise guter Wärmebeständigkeit und hoher Schlagzähigkeit zugänglich.

Die Verwendung einer Mischung unverträglicher Polyole hat jedoch eine Reihe lager- und verarbeitungstechnischer Nachteile. Bereits eine kurzfristige Lagerhaltung, d.h. einige Stunden bis 3 Tage, derartiger gut durchgemischter Polyolsysteme führt zur Auftrennung des Gemisches in 2 Phasen, so daß vor jedem Abfüllen die Polyolmischungen wieder sehr intensiv durchmischt werden bzw. ständig gemischt oder im Kreislauf gefahren werden müssen, um zu gewährleisten, daß das Mischungsverhältnis der Komponenten erhalten bleibt.

Es sind verschiedene Wege bekannt geworden, solche Mischungen phasenstabil einzustellen.

Das Absetzen der Phasen kann z.B. gemäß der Lehre der US-PS 3 945 939 durch den Zusatz von kolloidaler Kieselsäure oder eines mit einer Oniumverbindung modifizierten Tons erfolgen. Ähnlich lehrt die DE-A 2 341 294 die Mitverwendung von inerten, oberflächenaktiven Materialien, die eine spez. Oberfläche von 10 - 800 $m^2/g$ aufweisen, wie Kieselsäureagglomerat und/oder ein Cyrysotil-Asbest und/oder ein in seinem mineralischen Aufbau Crysotil-Asbest entsprechendes anorganisches Material.

Eine andere Möglichkeit, mehrere miteinander unverträgliche Polyole zu homogenisieren, besteht in der Mitverwendung von flüssigen oder löslichen Lösungsvermittlern. So werden gemäß US-PS 4 141 952 Gemische aus monomeren Polyolen mit einer Molmasse < 500 und Polyetherpolyolen mit einer Molmasse von 1800-7000 dadurch vor der Separation bewährt, daß sogenannte Pfropfpolypropylenetherglykole der Molmasse 1500-3500 mitverwendet werden.

Eine stabile Emulsion aus einem hochmolekularen Polyol und Ethylenglykol oder Butandiol-1,4 wird gemäß US-PS 4 273 884 dadurch hergestellt, daß ein Ethylenoxid/Propylenoxid-Copolymer (Molmasse 12000) mitverwendet wird.

In der DE-B 2 759 398 werden Mischungen aus Poly(oxypropylen/oxyethylen)-polyolen (OH-Zahl 20-60) mit bestimmten Oxyethylengehalten und Ethylenglykol oder Butandiol beschrieben. Die verwendeten Polyole weisen dabei zwingend einen Oxyethylenendabschluß von 10 bis 30 Gew.-% und einen inneren Oxyethylengehalt von 5 bis 60 Gew.-% auf. Dabei ist es bevorzugt, daß die Polyole möglichst viel Ethylenoxid im Inneren einverleibt enthalten.

In US-B 471 405 werden Gemische aus hochmolekularen Polyoxyalkylenpolyolen, die OH-Äquivalentgewichte von 650-3000 aufweisen, und z.B. Ethylenglykol dadurch vor der Entmischung bewahrt, daß lösliche Diolverbindungen wie 1,2-Butylenglykol, Di-(1,2-butylenglykol), Di-(1,2-propylenglykol) und Tri-(1,2-propylenglykol) mitverwendet werden.

Weiterhin ist es dem Fachmann bekannt, daß zweiphasige Gemische aus miteinander unverträglichen Polyolen auch durch Zugabe von Emulgatoren wie z.B. langkettiger Benzolalkylsulfonate etc. einphasig stabilisiert werden können.

Alle diese Lehren gemäß des Standes der Technik können nicht voll befriedigen. So kann die Verwendung von Feststoffen als Emulsionsstabilisatoren die Abrasion von Dosier- und Mischeinrichtungen bewirken, auch läßt die Stabilisierungswirkung im allgemeinen nach einigen Tagen schon stark nach. Außerdem werden gegen asbestöse Materialien physiologische Bedenken ins Feld geführt. Zu berücksichtigen ist bei der Verwendung solcher oberflächenaktiven Substanzen deren katalytische Eigenaktivität insbesondere bei Beladung mit Onium-Verbindungen.

Die Mitverwendung von sog. "Pfropfpolyolen", wie sie die US-PS 4 141 852 vorschlägt, hat den Nachteil, daß solche "Pfropfpolyole" teuer sind und so die Wirtschaftlichkeit des Verfahrens beeinträchtigen.

Die Lehre der US-PS 4 273 884 vermag ebenfalls nicht die Wünsche nach einem einphasig lagerstabilen Polyolgemisch zu befriedigen. Die herstellbaren Emulsionen zeigen nämlich schon zumindest teilweise innerhalb der ersten 6-8 Wochen eine Separation der Phasen. Die obige Patentschrift beschreibt im übrigen, daß "ziemlich stabile" Emulsionen erhalten werden.

Die Mitverwendung von Di- und Tripropylenglykol vermag zwar, wie in US-B 471 405 gelehrt wird, solche einphasig stabilen Polyolmischungen zu erzeugen, doch ist es jedem Fachmann bekannt, daß die Mitverwendung dieser Verbindungen zu einem scharfen Abfall der mechanischen Werte daraus hergestellter Polyurethankunststoffteile führt; insbesondere leidet die Wärmeformbeständigkeit.

Die Verwendung üblicher Emulgatoren zur Einphaseneinstellung leidet an einer Reihe von Nachteilen. Die Emulgatoren können mit der Zeit aus der Polyolmischung kristallin ausfallen oder sich z.B. an der Oberfläche anreichern, sie können die katalytische Systembalance in unkontrollierbarer Weise verändern, sie können aus dem fertigen Polyurethan ausschwitzen und damit dessen Gebrauchseigenschaften drastisch mindern.

Es besteht also weiterhin ein dringendes technisches Interesse an für einen genügend langen Zeitraum lagerstabilen Polyol- bzw. Polyol-Polyamin-Formulierungen, die eine hohe Misch-Hydroxyl-, gegebenenfalls Hydroxyl/Amin-Zahl haben und gegebenenfalls einen hohen Anteil an bevorzugt niedermolekularen Kettenverlängerern aufweisen.

Die DE-A 3 219 759 vermittelt die Lehre, die Verträglichkeit von (i) höhermolekularen Polyoxyalkylenpolyolen des OH-Zahlbereichs 20 - 210, die mindestens 5 Gew.-% überwiegend endständiger Oxyethylensegmente aufweisen mit (ii) Ethylenglykol dadurch herzustellen, daß man das Ethylenglykol mit 0,1 bis 0,5 Mol Propylenoxid pro Mol Ethylenglykol modifiziert.

Die DE-A 3 219 822 (= EP-A-0 095 635) vermittelt die Lehre, daß die verträglichkeitsmachende Wirkung der Propoxylierung des Ethylenglykols (und/oder des ebenfalls als niedermolekulares Diol in Betracht gezogenen 1,4-Butandiols) noch verstärkt werden kann, wenn man den Gemischen bestimmte Ammonium- oder Metallsalze der auch erfindungsgemäß einzusetztenden Art einverleibt.

EP-0 150 427 beschreibt die Verwendung von Kaliumsalzen als Verträglichkeitsvermittler. Unter anderen wird auch das Additionsprodukt von Kaliumhydrogensulfit an 2-cis-Butendiol-1,4 mit anschließender Umsetzung mit Propylenoxid als Lösungsvermittler vorgeschlagen. Die Verwendung von 2-cis-Butendiol-1,4 selbst wird nicht als Löslichkeitsvermittler gelehrt.

US 4 786 435 beschreibt die Verwendung von Phenolen als Verträglichkeitsvermittler für RIM-Systeme.

US 4 839 087 lehrt die Verwendung von Urethanen als Verträglichkeitsvermittler für RIM-Systeme. US 4 673 696 beschreibt die Verwendung von ungesättigten Esterolen wie z.B. Fumarsäure oder Maleinsäureestern als Verträglichkeitsvermittler. Deren Verwendung in RIM-Systemen wird gelehrt. Die EP-A 0 341 375 beschreibt die Verwendung von Gemischen von Polyoxypropylentriolen in lagerstabilen RIM-Systemen. Die Mischungen können frei von Polyoxyethylen-Anteilen im Polyether sein.

US 4 385 133 beschreibt verträgliche Mischungen von Glycolen und Propylenoxid-Ethylenoxid-Polyolen, wobei ein hoher Mindestanteil von Ethylenoxid-Gruppen notwendig ist. Die Mischungen können in RIM-Systemen eingesetzt werden. US 4 319 973 beschreibt Polyurethan-Elastomere, die unter Verwendung lagerstabiler Mischungen bestimmter Polymer-Polyole mit Glycolen hergestellt werden. Die Anwendbarkeit ist auf bestimmte Ethylenoxid-Anteile und bestimmte Zusammensetzung der Polymer-Polyole beschränkt.

US 4 576 731 beschreibt Mischungen von Polyolen, die durch Umsetzung mit Isocyanaten eine verbesserte Verträglichkeit aufweisen.

Zweikomponenten-Polyurethanklebstoffe sind seit langem bekannt. So werden in den US-A-3 274 160 die Reaktionsprodukte von Polyisocyanaten mit einem Gemisch beschrieben, welches alkoholische Hydroxylfunktionen besitzt. Die US-A-3 591 561 und 3 725 355 beschreiben die Herstellung von Polyurethanelastomeren. Im ersten Fall werden ein Lactonpolyesterpolyol und ein niedermolekulares Diol mit einem organischen Diisocyanat umgesetzt und mittels Diamin oder Polyol wie z.B. Glycerin vernetzt. Im zweiten Fall wird das Polyurethanelastomer aus einem Polyetherpolyol, einem Kettenverlängerer und einem Isocyanatprepolymeren unter Verwendung eines Zinnkatalysators gewonnen. US-A-3 577 295 beschreibt Polyurethanelastomere für Treibriemen unter Verwendung von Polyolgemischen, welche Polymerisate ungesättigter Monomerer enthalten, organischen Polyisocyanaten und Aminen als Härtungsmittel. In US-A-4 182 898 sind Polyurethane beschrieben aus Polyesterpolyol-Prepolymeren, die im Gemisch mit niedermolekularen Polyolen Mit Diisocyanaten umgesetzt werden. US-A-4 193 832 beschreibt die Reaktion von Polyisocyanaten mit isocyanatreaktivem Wasserstoff, bei der tertiäre Amine als Katalysatoren fungieren können. Ein Herstellungsverfahren für Polyurethanklebstoffe unter Verwendung überschüssigen Diisocyanates, Polyolen und gegebenenfalls Kettenverlängerern wie z.B. Aminen wird in US-A-4 156 064 beschrieben. Speziell die Verwendung von Aminen zur Bewirkung des "non-sagging"-Charakters von Klebstoffen wird beschrieben in US-A-3 979 364, 4 336 298 und 4 444 976 sowie EP-A-63 534.

US-A-4.487.909 beschreibt einen Klebstoff auf der Basis eines Polyols, z.B. eines Polyetherpolyols und Glycerin als Verzweiger. In US-A-4 530 941 wird eine RIM-Polyurethanmischung beschrieben, die sich zusammensetzt aus einem hochmolekularen Polyol, einem Kettenverlängerer, einem mit Aminendgruppen versehenen Polyoxyalkylen und einem Polyisocyanat. US-A-4 554 340 beschreibt die Polyolmischung zur Herstellung von Polyurethanen aus hochmolekularem Polyalkylenoxid und niedermolekularem Diol, gegebenenfalls auch isocyanatreaktiven Verbindungen wie Glycerin und Diamin. US-A-4 568 717 beschreibt die Herstellung von Polyolen aus organischen Polyisocyanaten mit einem Terephthalsäurepolyesterpolyol. US-A-3 714 127 beschreibt Zweikomponenten-Polyurethanklebstoffe auf Basis eines Isocyanatprepolymeren,

dem zum Zwecke der Viskositätserhöhung und zur Gewährleistung von non-sagging Verhalten ein Amin zugesetzt wird.

EP-A-0 068 209 beschreibt einen Zweikomponenten-Polyurethanklebstoff mit einer Polyolkomponente, welche ein Polyester- oder Polyethertriol, ein Phenylendiamin und einen Zinnkatalysator enthält. Diese Mischung wird mit einem aromatischen Diisocyanat zur Reaktion gebracht.

EP-A-248 254 beschreibt einen Zweikomponenten-Polyurethanklebstoff, der das Reaktionsprodukt ist aus einem hydroxylfunktionellen Material, einem Di- oder Triamin und einem organischen Isocyanat. Die so hergestellten Klebstoffe zeichnen sich durch hervorragende Eigenschaften aus, jedoch befriedigen sie noch nicht alle Ansprüche hinsichtlich der Lagerstabilität der Polyolkomponente.

Der Erfindung lag daher die Aufgabe zugrunde, verträgliche Mischungen höhermolekularer Polyhydroxidverbindungen und kurzkettiger Polyole und Polyamine bereitzustellen, die in Abmischung mit Isocyanaten leistungsfähige Zweikomponenten-Klebstoffsysteme darstellen.

Gegenstand der Erfindung ist ein Zweikomponenten-Polyurethan-Klebstoff, enthaltend eine Isocyanatkomponente a), gegen Entmischung stabile, aktiven Wasserstoffenthaltende Komponente b) sowie gegebenenfalls Katalysatoren für die Umsetzung von a) mit b) und gegebenenfalls weiteren Hilfs- und Zusatzstoffen.

Gegenstand der Erfindung sind Zweikomponenten-Polyurethane, enthaltend eine Isocyanatkomponente a), eine verträgliche, mit Isocyanat reaktive Komponente b) sowie gegebenenfalls Katalysatoren für die Umsetzung von a) mit b) und gegebenenfalls weiteren Hilfs- und Zusatzstoffen, dadurch gekennzeichnet, daß die Komponente b) folgende Bestandteile enthält:

b1) 100 Gew.-Teile wenigstens einer Hydroxylgruppen-haltigen Verbindung mit einem Molekulargewicht von mindestens 400 und einer Hydroxylfunktionalität von mindestens 2

b2) 2-20 Gew.-Teile wenigstens eines aliphatischen, aromatischen oder cycloaliphatischen Diamins oder Triamins mit einem Molekulargewicht von mindestens 60

b3) 5-40 Gew.-Teile wenigstens einer hydroxylgruppen-haltigen, wenigstens eine C-C-Doppelbindung oder eine C-C-Dreifachbindung enthaltenden Kettenverlängerern mit einem Molekulargewicht von 86-400 und einer Funktionalität von mindestens 2, der keine Carboxylgruppen aufweist,

b4) 0-35 Gew.-Teile wenigstens eines hydroxylgruppen-haltigen Kettenverlängers mit einem Molekulargewicht von 62-400 und einer Funktionalität von mindestens 2.

In einer bevorzugten Ausführungsform sind in den Teilkomponenten a) und b) weiter übliche Hilfs- und Zusatzstoffe enthalten. In einer besonders bevorzugten Ausführungsform ist ein Katalysator in der Komponente b) enthalten. Der Katalysator wird vorzugsweise in einer solchen Menge eingesetzt, daß pro 100 g in der Komponente b) mindestens 0,005 g tertiärer Aminstickstoff enthalten ist unter Berücksichtigung des gegebenenfalls als Komponente b1) enthaltenen tertiären Stickstoffs.

Als Isocyanatkomponenten kommen vor allen Dingen Verbindungen der folgenden Formel in Frage:

$$Q\ (NCO)_n,$$

in der

n = 2-4, vorzugsweise 2, und

Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8-13 C-Atomen bedeuten.

Besonders bevorzugte Polyisocyanate sind Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder - 4,4'-diisocyanat, Naphthylen-1,5-diisocyanat, Triphenylmethan-4,4',4''-triisocyanat oder Polyphenyl-polymethylenpolyisocyanate, wie sie durch Anilin-Formaldehyd-Kondensation und anschließende Phosgenierung erhalten werden.

Geeignete höhermolekulare Polyisocyanate sind Modifizierungsprodukte derartiger einfacher Polyisocyanate, d.h. Polyisocyanate mit z.B. Isocyanurat-, Carbodiimid-, Allophanat-, Biuret- oder Uretdion-Struktureinheiten, wie sie nach an sich bekannten Verfahren des Standes der Technik aus den beispielhaft genannten einfachen Polyisocyanaten der oben genannten allgemeinen Formel hergestellt werden können. Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis

10.000, vorzugsweise 600 bis 8.000 und insbesondere 800 bis 5.000 von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 62 bis 599, vorzugsweise 62 bis 200 wie z.B. Ethylenglykol, Trimethylolpropan, Propandiol-1,2 oder Butandiol-1,4, oder Butandiol-2,3, insbesondere jedoch höhermolekulare Polyetherpolyole und/oder Polyesterpolyole der aus der Polyurethanchemie an sich bekannten Art mit Molekulargewichten von 600 bis 8.000, vorzugsweise 800 bis 4.000, die mindestens zwei, in der Regel 2 bis 8, vorzugsweise aber 2 bis 4 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind. Zur Herstellung der NCO-Prepolymeren geeignete Verbindungen mit gegenüber Isocyanatgruppen reaktionsfähigen Gruppen, insbesondere Hydroxylgruppen, sind beispielsweise die in US-PS 4 218 543, Kolonne 7, Zeile 29 bis Kolonne 9, Zeile 25 beispielhaft offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO/OH-Äquivalentverhältnisses von ca. 1,5:1 bis 20:1, vorzugsweise 5:1 bis 15:1 zur Umsetzung gebracht. Die NCO-Prepolymeren weisen im allgemeinen einen NCO-Gehalt von 2,5 bis 25, vorzugsweise 6 bis 22, Gew.-% auf. Hieraus geht bereits hervor, daß im Rahmen der vorliegen Erfindung unter "NCO-Prepolymeren" bzw. unter "Prepolymeren mit endständigen Isocyanatgruppen" sowohl die Umsetzungsprodukte als solche als auch ihre Gemische mit überschüssigen Mengen an nicht umgesetzten Ausgangspolyisocyanaten, die oft auch als "Semiprepolymere" bezeichnet werden, zu verstehen sind.

Für das erfindungsgemäße Verfahren besonders bevorzugte Polyisocyanatkomponenten a1) sind die in der Polyurethanchemie üblichen technischen Polyisocyanate, d.h. Hexamethylendiisocyanat, 1-Isocyanato-3,3,5-trimethyl-5-isocyanatomethyl-cyclohexan (Isophorondiisocyanat, abgekürzt: IPDI), 4,4'-Diisocyanatodicyclohexylmethan, 2,4-Diisocyanatotoluol, dessen technische Gemische mit 2,6-Diisocyanatotoluol, 4,4'-Diisocyanatodiphenylmethan, dessen Gemische mit den entsprechenden 2,4'- und 2,2'-Isomeren, Polyisocyanatgemische der Diphenylmethanreihe, wie sie durch Phosgenierung von Anilin/Formaldehyd-Kondensaten in an sich bekannter Weise gewonnen werden können, die Biuret- oder Isocyanuratgruppen aufweisenden Modifizierungsprodukte dieser technischen Polyisocyanate und insbesondere NCO-Prepolymere der genannten Art auf Basis dieser technischen Polyisocyanate einerseits und den beispielhaft genannten einfachen Polyolen und/oder Polyetherpolyolen und/oder Polyesterpolyolen andererseits, sowie beliebige Gemische derartiger Polyisocyanate.

Zu den gegebenenfalls mitzuverwendenden Hilfs- und Zusatzstoffen zählen beispielsweise Füllstoffe, Farbstoffe, Zeolithe und Pigmente.

Als Füllstoffe, insbesondere verstärkend wirkende Füllstoffe, seien beispielhaft genannt: silikatische Mineralien, beispielsweise Schichtsilikate wie Antigorit, Serpentin, Hornblenden, Amphibole, Chrisotil, Talkum; Metalloxide wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden natürliche und synthetische faserförmige Materialien wie Asbest, Wollastonit und insbesondere Glasfasern verschiedener Länge, die gegebenenfalls geschlichtet sein können.

Füllstoffe können einzeln oder als Gemisch verwendet werden.

Die Füllstoffe werden, falls überhaupt, der Reaktionsmischung vorteilhafterweise in Mengen von bis zu 50 Gew.-%, vorzugsweise bis zu 30 Gew.-%, bezogen auf das Gewicht der Komponenten a) und b), zugegeben.

Nähere Angaben über die üblichen Hilfs- und Zusatzstoffe sind der Fachliteratur, beispielsweise der Monographie von J.H. Saunders und K.C. Frisch "High Polymers" Band XVI, Polyurethanes, Teil 2 und 7, Verlag Interscience Publishers 1962 bzw. 1964, zu entnehmen.

Bei der Komponente b1) des erfindungsgemäßen Systems handelt es sich vorzugsweise um mindestens eine organische Verbindung mit einem Molekulargewicht von 400 - 12.000, vorzugsweise 400 - 6.000, mit 2 - 8, vorzugsweise 2 - 5, Hydroxylfunktionen. Die hier angegebenen Molekulargewichte sind aus der OH-Zahl der Substanz über folgende Beziehung zu errechnen:

$$\text{Molekulargewicht} = \frac{56.000}{\text{OH-Zahl}} \times \text{Funktionalität}$$

Es können beispielsweise Polyhydroxypolyether der aus der Polyurethanchemie an sich bekannten Art verwendet werden, wie sie durch Alkoxylierung geeigneter Startermoleküle wie Ethylenglykol, Diethylenglykol, 1,4-Dihydroxybutan, 1,6-Dihydroxyhexan, Trimethylolpropan, Glycerin, Pentaerythrit, Sorbit oder Saccharose zugänglich sind. Als Starter können ebenfalls fungieren: Ammoniak oder Amine wie Ethylendiamin, Hexamethylendiamin, 2,4-Diaminotoluol, Anilin oder Aminoalkohole. Die Alkoxylierung erfolgt unter Verwendung von Propylenoxid und/oder Ethylenoxid in beliebiger Reihenfolge.

Ferner geeignet sind Polyesterpolyole, wie sie durch Umsetzung der beispielhaft genannten niedermolekularen Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen läßt. Derartige Verfahren sind beispielsweise in DE-AS 1 168 075 und 1 260 142, sowie DE-A-2 324 134, 2 423 984, 2 512 385, 2 513 815, 2 550 796, 2 550 797, 2 550 833, 2 550 862, 2 633 293 und 2 639 254 beschrieben. Es ist aber auch möglich gemäß US-A-3 869 413 bzw. DE-A-2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-A-3 383 351, 3 304 273, 3 523 093, 3 110 695; DE-A-1 152 536) oder Polycarbonatpolyolen (DE-PS 1 769 795; US-A-3 637 909) erhalten werden, sind für das erfindungsgemäße Verfahren als Komponente b) geeignet. Bei Verwendung von Polyetherpolyolen, welche gemäß DE-A-2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)-acrylsäureestern modifiziert wurden, erhält man Kunststoffe von besonderer Flammwidrigkeit.

Vertreter der genannten erfindungsgemäß als Verbindungen b1) zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Bevorzugte Amine b2) haben ein Molekulargewicht von 60 - 300. Besonders bevorzugt sind dabei Diamine wie 1,4-Diaminobenzol, 2,4-Diaminotoluol, 2,4'-und/oder 4,4'-Diaminodiphenylmethan oder vorzugsweise solche Diamine, die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten kylsubstituenten mit jeweils 1 bis 3 Kohlenstoffatomen aufweisen, besonders bevorzugt um solche, die in jeweils mindestens einer ortho-Stellung zu den Aminogruppen einen Ethyl-, n-Propyl- und/oder Isopropylsubstituenten und gegebenenfalls in weiteren ortho-Stellungen zu den Aminogruppen Methylsubstituenten aufweisen. Zu diesen bevorzugten bzw. besonders bevorzugten Diaminen gehören 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, dessen technischen Gemische mit 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan oder 3,5-Diethyl-3',5'-diisopropyl-4,4'-diaminodiphenylmethan. Beliebige Gemische derartiger aromatischer Diamine können ebenfalls eingesetzt werden.

Besonders bevorzugte aliphatische Diamine sind Isophorondiamin, Bis-(4-aminocyclohexyl)-methan, 1,4-Diaminocyclohexan, Ethylendiamin und seine Homologen und Piperazin.

Die Polyole b3) sind niedermolekulare, ungesättigte mehrwertige Alkohole mit einem Molekulargewichtsbereich von 86 bis 400. Die ungesättigten Alkohole können C-C-Doppelbindungen und/oder C-C-Dreifachbindungen enthalten, wie z.B. 3-Butendiol-1,2 oder 2-Butindiol-1,4. Die ungesättigten Alkohole können bei Raumtemperatur als Flüssigkeiten oder als Feststoffe vorliegen.

Besonders bevorzugte ungesättigte Alkohole sind symmetrisch aufgebaute Diole, wie cis-2-Butendiol-1,4; trans2-Butendiol-1,4; 2-Butindiol-1,4; 3-Hexindiol-2,5. Es können auch Gemische dieser Verbindungen eingesetzt werden.

Bevorzugte Polyole b4) sind niedermolekulare mehrwertige Alkohole mit einem Molekulargewichtsbereich von 62 - 400, wie die bereits als Startermoleküle unter b1) erwähnten Substanzen wie Ethylenglykol, Diethylenglykol, 1,4-Dihydroxybutan, Butandiol-2,3, 1,6-Dihydroxyhexan, Trimethylolpropan, Glycerin, Pentaerythrit, Sorbit oder Saccharose, Besonders bevorzugt sind mehrwertige Alkohole mit einer Funktionalität von 2.

Bevorzugte Katalysatoren sind im folgenden angegeben:

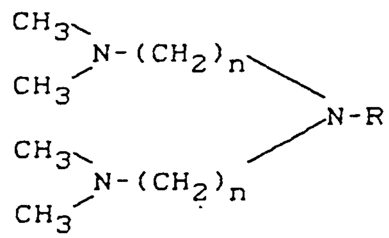

mit n = 2,3 und R = H, CHO oder $CH_3$
Besonders bevorzugte Katalysatoren sind:

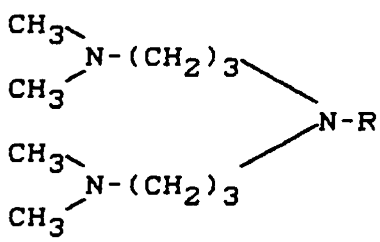

und

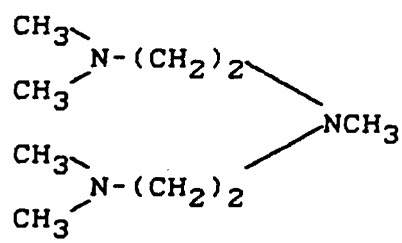

mit R = CHO oder H.

Gegenstand der vorliegenden Erfindung ist auch ein Verfahren zum Verkleben von Substanzen mit dem erfindungsgemäßen System. Das erfindungsgemäße System eignet sich insbesondere zum Verkleben von Kunststoffen, Metallen, Holz, Stein und Glas.

Die Anwendung des Zweikomponenten-Polyurethanklebstoffes erfolgt vorzugsweise durch kontinuierliches Mischen der beiden Komponenten a) und b) entweder in einem Rührermischer, in einem statischen Mischer oder in einem Gegenstrom-Mischer und sofortigen Auftrag des fertigen Klebstoffes als Raupe auf mindestens eines der zu verklebenden Substrate. Eine Vorbehandlung der Substratoberflächen im Sinne einer Reinigung, Aufrauhung oder einer sonstigen Vorbehandlung ist häufig nicht erforderlich. Die Mengenverhältnisse von Isocyanat- zu Polyolkomponenten folgen den allgemein in der Isocyanatchemie geltenden Prinzipien; es wird mit geringfügigem Isocyanatüberschuß gearbeitet (Kennzahlbereich: 100 - 125, bevorzugt: 100 - 115).

Die mit Klebstoff versehenen Substrate werden zusammengelegt, fixiert und entweder bei Raumtemperatur aushärten gelassen bzw. einem Härtungsprozeß bei erhöhter Temperatur unterworfen. Bei erhöhter Temperatur kann der Zustand der Handhabungsfestigkeit schneller erreicht werden als bei Raumtemperatur.

Die gewünschte offene Zeit bzw. Aushärtezeit kann durch die Wahl der Aushärtetemperatur und Wahl des Katalysators in weiten Grenzen variiert werden.

Ein weiterer Vorteil des erfindungsgemäßen Klebstoffs besteht darin, daß er lösungsmittelfrei verarbeitet werden kann.

Der Gegenstand der Erfindung soll anhand der folgenden Beispiele noch näher erläutert werden (%-Angaben sind, soweit nicht anders vermerkt ist, Gew.-%).

Beispiele

Katalysator: Kat. 1 = tert. Aminkatalysator der Struktur

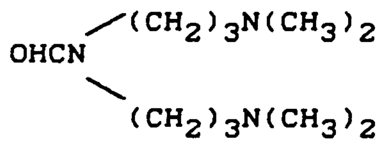

Zeolith-Paste:
Eine 50 %ige Zeolith-Suspension in Ricinusöl
H12-MDA: Aliphatisches Diamin der Struktur

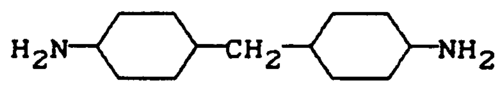

Roh-MDI: 4,4'-Diisocyanatodiphenylmethan im Gemisch mit seinen Isomeren und höheren Homologen, wie sie durch Phosgenierung von Anilin-Formaldehyd-Kondensaten erhalten werden, NCO-Gehalt 30,4 %, Viskosität bei etwa 25 °C: 80 mPas.
Kettenverlängerer:
cis-BD = 2 cis-Butendiol-1,4
3-BD = 2-Butindiol-1,4
ges-BD = Butandiol-1,4

Polyole:

A = trifunktionelles Polyetherpolyol, 83 % Propylenoxid, 17 % Ethylenoxid-Endgruppen, [Mn] ca. 4800 g/Mol, OH-Zahl 35 mg KOH/g
B = In Analogie zu Beispiel 1 der DE-A-263 759 wird ein Füllstoffpolyether hergestellt, wobei als "Lösungsmittel" 5077 Gew.-Teile eines Polyetherpolyols der OH-Zahl 35 mg KOH/g, hergestellt durch Propoxylierung von Trimethylolpropan und Ethoxylierung des Propoxylierungsprodukts (PO:EO-Verhältnis = 83:17), an Stelle der 670 Gew.-Teile Hydrazinhydrat lediglich 380 Gew.-Teile Hydrazinhydrat und an Stelle der 2310 Gew.-Teile Toluylendiisocyanat lediglich 1320 Gew.-Teile des Diisocyanates umgesetzt werden.
Es resultiert ein Polyether mit einem Gehalt an organischem Füllstoff von 20 Gew.-% und einer Hydroxyzahl von 28 mg KOH/g.
C = Es wird ein Füllstoffpolyether hergestellt, wobei als "Lösungsmittel" 780 Gew.-Tl. eines Polyetherpolyols der OH-Zahl 35 mg KOH/g, hergestellt durch Propoxylierung von Trimethylolpropan und Ethoxylierung des Propoxylierungsprodukts (PO:EO-Verhältnis = 83:17), eingesetzt werden.
Durch die radikalische in situ Polymerisation von 120 Gew.-Tl. eines Gemischs aus Acrylnitril und Styrol im Gewichtsverhältnis von 60 zu 40 im Polyether resultiert ein Polyether mit einem Gehalt an organischem Füllstoff von 20 Gew.-% und einer Hydroxyzahl von 28 mg KOH/g.
D = difunktionelles Polyetherpolyol, nur Propylenoxid-Addukt, [Mn] ca. 2000 g/Mol, OH-Zahl 56 mg KOH/g
E = trifunktionelles Polyetherpolyol, 83 % Propylenoxid, 17 % Ethylenoxid-Endgruppen, [Mn] ca. 6000 g/Mol, OH-Zahl 28 mg KOH/g
F = Ricinusöl, OH-Zahl ca. 160 mg KOH/g.

Die folgenden Beispiele verdeutlichen die verbesserte Verträglichkeit von ungesättigten Kettenverlängerern im Vergleich zu den gesättigten Kettenverlängerern mit unterschiedlichen Polyolen bei Raumtemperatur.

| Beispiel | Diol-typ | -Masse Gew.-Tle. | Polyol-typ | -Masse Gew.-Tl. | Verträglichkeit |
|---|---|---|---|---|---|
| 1 | cis-BD | 25 | A | 80 | homogen |
| * | ges-BD | 25 | A | 80 | inhomogen |
| 1a) | cis-BD | 40 | A | 80 | homogen |
| 2 | cis-BD | 25 | B | 100 | homogen |
| * | ges-BD | 25 | B | 100 | inhomogen |
| 3 | cis-BD | 25 | C | 100 | homogen |
| * | ges-BD | 25 | C | 100 | inhomogen |
| 4 | cis-BD | 25 | D | 80 | homogen |
| * | ges-BD | 25 | D | 80 | inhomogen |
| 5 | cis-BD | 25 | E | 80 | homogen |
| * | ges-BR | 25 | E | 80 | inhomogen |
| 6 | cis-BD | 15 | F | 80 | homogen |
| * | ges-BD | 15 | F | 80 | inhomogen |

* = Vergleichsbeispiele, nicht erfindungsgemäß

Die nachfolgenden Beispiele zeigen, daß auch Mischungen der ungesättigten Kettenverlängerer mit gesättigten Kettenverlängerern homogene, lagerstabile Mischungen mit Polyolen ergeben.

| Bsp. | Diol-typ 1 | -Masse Gew.-Tl. | Diol-typ 2 | -Masse Gew.-Tl. | Polotyp | -Masse Gew.-Tl. | Verträgl. |
|---|---|---|---|---|---|---|---|
| 7 | cis-BD | 15 | ges-BD | 10 | A | 80 | homogen |
| 8 | 3-BD | 15 | ges-BD | 10 | A | 80 | homogen |

Die nachfolgenden Beispiele zeigen, daß sich unter Verwendung der ungesättigten Kettenverlängerer Polyolkomponenten formulieren lassen, die sowohl bei erhöhter als auch bei erniedrigter Temperatur lagerstabile Mischungen darstellen.

Beispiel 9

Polyolmischung: 100,0 Gew.-Tl. Polyol B
25,0 Gew.-Tl. cis-BD

2,5 Gew.-Tl. $H_{12}$-MDA

Die Mischung zeigt nach 5 Wochen Lagerung bei +6°C, bzw. 2 Wochen Lagerung bei +50°C keine Separationserscheinungen.

Beispiel 10

| | |
|---|---|
| Polyolmischung: | 100,0 Gew.-Tl. Polyol B |
| | 15,0 Gew.-Tl. cis-BD |
| | 10,0 Gew.-Tl. ges-BD |
| | 2,5 Gew.-Tl. $H_{12}$-MDA |

Die Mischung zeigt nach 5 Wochen Lagerung bei +6°C, bzw. 2 Wochen Lagerung bei +50°C keine Separationserscheinungen.

Beispiel 11

| | |
|---|---|
| Polyolmischung: | 100,0 Gew.-Tl. Polyol C |
| | 15,0 Gew.-Tl. cis-BD |
| | 10,0 Gew.-Tl. ges-BD |
| | 2,5 Gew.-Tl. $H_{12}$-MDA |

Die Mischung zeigt nach 5 Wochen Lagerung bei +6°C, bzw. 2 Wochen Lagerung bei +50°C keine Separationserscheinungen.

Die nachfolgenden Beispiele zeigen, daß sich unter Verwendung der ungesättigten Kettenverlängerer Klebstoffe formulieren lassen, die ein gutes Leistungsniveau in den klebtechnischen Eigenschaften erreichen und deren Polyol-Komponente stabil gegen Entmischung ist.

Für die Prüfung der Zugscherfestigkeiten in Anlehnung an DIN 53 283 wurden einschnittig überlappte Verbindungen aus dem zu verklebenden Kunststoffmaterial hergestellt. Die Klebfugendichte betrug 0,8 mm, sofern nicht anders angegeben, die Prüfkörperbreite 20 mm, die Prüfkörperstärke 4 mm (Baydur STR 3 mm), die Überlappungslänge 10 mm. Die Zugscherfestigkeit wird als Mittelwert von 5 Proben angegeben. Die Fügeteile wurden keiner besonderen Vorbehandlung unterzogen. Baydur STR wurde mit Schmirgelpapier aufgerauht.

Beispiel 12

Fügeteile: Ungesättigtes, glasfaserverstärktes Polyesterharz (SMC)
Abbindebedingungen: 20 min bei 140°C (Laborumluftofen)
Klebefugendicke: 0,15 mm

| | |
|---|---|
| Polyol-Komponente: | 100,0 Gew.-Tl. Polyol F |
| | 15,0 Gew.-Tl. cis-BD |
| | 5,0 Gew.-Tl. $H_{12}$-MDA |
| | 6,0 Gew.-Tl. Zeolith-Paste |

Isocyanat-Komponente: 100,7 Gew.-Tl. Roh-MDI
Die Zugscherfestigkeit betrug 9,1 N/mm$^2$.

Beispiel 13

Fügeteile: Ein Polycarbonat-ABS-Blend mit 85 % Polycarbonat-Anteil
Abbindebedingungen: 24 h bei Raumtemperatur

| | |
|---|---|
| Polyol-Komponente: | 127,5 Gew.-Tl. der Polyolmischung aus Bsp. 10 |
| | 6,0 Gew.-Tl. Zeolith-Paste |
| | 0,39 Gew.-Tl. Kat. 1 |

Die erhaltene Polyol-Komponente wurde 14 d bei -20°C gelagert und dann auf Raumtemperatur gebracht. Dabei wurden keine Separationserscheinungen festgestellt. Die Polyol-Komponente wurde dann mit der Isocyanat-Komponente abgemischt.
Isocyanat-Komponente : 100,0 Gew.-Tl. Roh-MDI
Die Zugscherfestigkeit bei Raumtemperatur betrug 6,2 N/mm$^2$, das Bruchbild zeigte vollständiges Fügeteilversagen.

Beispiel 14

Fügeteile : Ein Polycarbonat-ABS-Blend mit 85 % Polycarbonat-Anteil
Abbindebedingungen: 24 h bei Raumtemperatur
Polyol-Komponente:
127,5 Gew.-Tl. der Polyolmischung aus Bsp. 10
6,0 Gew.-Tl. Zeolith-Paste
0,39 Gew.-Tl. Kat. 1
Die erhaltene Polyol-Komponente wurde 14 d bei +50 °C gelagert und dann auf Raumtemperatur gebracht. Dabei wurden keine Separationserscheinungen festgestellt. Die Polyol-Komponente wurde anschließend mit der Isocyanat-Komponente abgemischt.
Isocyanat-Komponente: 100,0 Gew.-Tl. Roh-MDI
Die Zugscherfestigkeit bei Raumtemperatur betrug 8,3 N/mm$^2$, das Bruchbild zeigte vollständiges Fügeteilversagen.

Die Zugscherfestigkeit bei +85 °C betrug 5,9 N/mm$^2$, das Bruchbild zeigte vollständiges Fügeteilversagen.

Beispiel 15

Fügeteile: Ein PUR-RIM des Typs Baydur STR 1300 (Dichte: 1000 kg/m$^3$, 10 Vol.-% Glas)
Abbindebedingungen: 24 h bei Raumtemperatur
Polyol-Komponente:
127,5 Gew.-Tl. der Polyolmischung aus Bsp. 10
6,0 Gew.-Tl. Zeolith-Paste
0,39 Gew.-Tl. Kat. 1
Die erhaltene Polyol-Komponente wurde 14 d bei +50 °C gelagert und dann auf Raumtemperatur gebracht. Dabei wurden keine Separationserscheinungen festgestellt. Die Polyol-Komponente wurde anschließend mit der Isocyanat-Komponente abgemischt.
Isocyanat-Komponente: 100,0 Gew.-Tl. Roh-MDI
Die Zugscherfestigkeit bei -40 °C betrug 12,0 N/mm$^2$, das Bruchbild zeigte vollständiges Fügeteilversagen.

Beispiel 16

Fügeteile: Ein PUR-RIM des Typs Baydur STR 1300 (Dichte: 1000 kg/m$^3$, 10 Vol.-% Glas)
Abbindebedingungen: 24 h bei Raumtemperatur
Polyol-Komponente: 127,5 Gew.-Tl. der Polyolmischung aus Bsp. 10
6,0 Gew.-Tl. Zeolith-Paste
0,39 Gew.-Tl. Kat. 1
Die erhaltene Polyol-Komponente wurde 14 d bei -20 °C gelagert und dann auf Raumtemperatur gebracht. Dabei wurden keine Separationserscheinungen festgestellt. Die Polyol-Komponente wurde anschließend mit der Isocyanat-Komponente abgemischt.
Isocyanat-Komponente: 100,0 Gew.-Tl. Roh-MDI
Die verklebten Prüfkörper wurden 14 d bei einer Temperatur von +60 °C im Wasser gelagert. Danach wurde eine Zugscherfestigkeit bei -40 °C von 10,9 N/mm$^2$ ermittelt, das Bruchbild zeigte vollständiges Fügeteilversagen.

Beispiel 17

Polyolmischung: 100,0 Gew.-Tl. Polyol B
40,0 Gew.-Tl. cis-BD
5,0 Gew.-Tl. $H_{12}$-MDA
Die Mischung bleibt nach 2 Wochen Lagerung bei +6 °C fließfähig und zeigt keine Separationserscheinungen.
Fügeteile: Ungesättigtes, glasfaserverstärktes Polyesterharz (SMC)
Abbindebedingungen: 20 min bei 140 °C (Laborumluftofen)
Eine Polyol-Komponente aus der o.g. Polyolmischung und zusätzlich 6,0 Gew.-Tl. Zeolith-Paste wird mit 152,4 Gew.-Tl. Roh-MDI abgemischt.

Die Zugscherfestigkeit betrug 6,2 N/mm$^2$, das Bruchbild zeigte vollständiges Fügeteilversagen.

Beispiel 18

Polyolmischung: 100,0 Gew.-Tl. Polyol B
30,0 Gew.-Tl. cis-BD
10,0 Gew.-Tl. ges-BD
5,0 Gew.-Tl. $H_{12}$-MDA

Die Mischung bleibt nach 2 Wochen Lagerung bei +6°C fließfähig und zeigt keine Separationserscheinungen.

Fügeteile: Ungesättigtes, glasfaserverstärktes Polyesterharz (SMC)
Abbindebedingungen: 20 min bei 140°C (Laborumluftofen)
Eine Polyol-Komponente aus der o.g. Polyolmischung und zusätzlich 6,0 Gew.-Tl. Zeolith-Paste wird mit 152,4 Gew.-Tl. Roh-MDI abgemischt.

Die Zugscherfestigkeit betrug 7,4 N/mm², das Bruchbild zeigte vollständiges Fügeteilversagen.

Beispiel 19

Polyolmischung: 100,0 Gew.-Tl. Polyol C
30,0 Gew.-Tl. cis-BD
2,5 Gew.-Tl. $H_{12}$-MDA

Die Mischung bleibt nach 2 Wochen Lagerung bei +6°C fließfähig und zeigt keine Separationserscheinungen. Bei einer Lagertemperatur von +50°C werden nach 2 Wochen ebenfalls keine Entmischungserscheinungen beobachtet.

Fügeteile: Ungesättigtes, glasfaserverstärktes Polyesterharz (SMC)
Abbindebedingungen: 20 min bei 140°C (Laborumluftofen)
Eine Polyol-Komponente aus der o.g. Polyolmischung und zusätzlich 0,3 Gew.-Tl. Kat. 1 sowie 6,0 Ge.-Tl. Zeolithpaste wird mit 118,5 Gew.-Tl. Roh-MDI abgemischt.

Die Zugscherfestigkeit bei Raumtemperatur betrug 5,6 N/mm².

**Patentansprüche**

1. Zweikomponenten-Polyurethane, enthaltend eine Isocyanatkomponente a), eine verträgliche, mit Isocyanat reaktive Komponente b) sowie gegebenenfalls Katalysatoren für die Umsetzung von a) mit b) und gegebenenfalls weiteren Hilfs- und Zusatzstoffen, dadurch gekennzeichnet, daß die Komponente b) folgende Bestandteile enthält:
   b1) 100 Gew.-Teile wenigstens einer Hydroxylgruppen-haltigen Verbindung mit einem Molekulargewicht von mindestens 400 und einer Hydroxylfunktionalität von mindestens 2
   b2) 2-20 Gew.-Teile wenigstens eines aliphatischen, aromatischen oder cycloaliphatischen Diamins oder Triamins mit einem Molekulargewicht von mindestens 60
   b3) 5-40 Gew.-Teile wenigstens einer hydroxylgruppen-haltigen, wenigstens eine C-C-Doppelbindung oder eine C-C-Dreifachbindung enthaltenden Kettenverlängerern mit einem Molekulargewicht von 86-400 und einer Funktionalität von mindestens 2, der keine Carboxylgruppen aufweist,
   b4) 0-35 Gew.-Teile wenigstens eines hydroxylgruppen-haltigen Kettenverlängers mit einem Molekulargewicht von 62-400 und einer Funktionalität von mindestens 2.

2. Verwendung von Polyurethanen gemäß Anspruch 1 als Zweikomponenten-Polyurethanklebstoffe.

**Claims**

1. Two-component polyurethanes containing an isocyanate component a), a compatible, isocyanate-reactive component b), optionally together with catalysts for the reaction of a) with b) and optionally further auxiliary substances and additives, characterised in that component b) contains the following constituents:
   b1) 100 parts by weight of at least one compound containing hydroxyl groups, having a molecular weight of at least 400 and a hydroxyl functionality of at least 2
   b2) 2 to 20 parts by weight of at least one aliphatic, aromatic or cycloaliphatic diamine or triamine having a molecular weight of at least 60
   b3) 5 to 40 parts by weight of at least one chain extender containing hydroxyl groups and at least one C-C double bond or a C-C triple bond, having a molecular weight of 86 to 400 and a

functionality of at least 2, and containing no carboxyl groups,
b4) 0 to 35 parts by weight of at least one chain extender containing hydroxyl groups, having a molecular weight of 62 to 400 and a functionality of at least 2.

**2.** Use of polyurethanes according to claim 1 as two-component polyurethane adhesives.

**Revendications**

**1.** Polyuréthannes à deux composants contenant un composant isocyanate a), un composant compatible, réactif avec les diisocyanates, b) et le cas échéant des catalyseurs pour la réaction de a) avec b), et le cas échéant d'autres produits auxiliaires et additifs, caractérisé en ce que le composant b) contient les constituants suivants :
b1) 100 parties en poids d'au moins un composé contenant des groupes hydroxy, de poids moléculaire au moins 400, fonctionnalité en groupes hydroxy au moins 2
b2) 2 à 20 parties en poids d'au moins une diamine ou triamine aliphatique, aromatique ou cycloaliphatique de poids moléculaire au moins 60
b3) 5 à 40 parties en poids d'au moins un agent d'allongement des chaînes contenant des groupes hydroxy et au moins une double liaison C-C ou une triple liaison C-C, à un poids moléculaire de 86 à 400 et avec une fonctionnalité d'au moins 2, mais exempt de groupes carboxyles
b4) 0 à 35 parties en poids d'au moins un agent d'allongement des chaînes contenant des groupes hydroxy, de poids moléculaire 62 à 400, fonctionnalité au moins 2.

**2.** Utilisation des polyuréthannes selon revendication 1, en tant que colles de polyuréthanne à deux composants.